(19) Europäisches Patentamt
European Patent Office
Office européen des brevets

(11) EP 3 975 285 B1

(12) **EUROPEAN PATENT SPECIFICATION**

(45) Date of publication and mention of the grant of the patent:
**27.03.2024 Bulletin 2024/13**

(21) Application number: **20810503.1**

(22) Date of filing: **14.05.2020**

(51) International Patent Classification (IPC):
***H01M 4/131*** (2010.01) ***H01M 4/1391*** (2010.01)
***H01M 4/525*** (2010.01) ***H01M 4/62*** (2006.01)
***H01M 10/052*** (2010.01) ***H01M 10/058*** (2010.01)
***H01M 10/0525*** (2010.01) ***H01M 4/02*** (2006.01)

(52) Cooperative Patent Classification (CPC):
**H01M 10/0525; H01M 4/131; H01M 4/525; H01M 4/62; H01M 4/623;** H01M 2004/028; Y02E 60/10; Y02P 70/50

(86) International application number:
**PCT/JP2020/019225**

(87) International publication number:
**WO 2020/235435 (26.11.2020 Gazette 2020/48)**

(54) **POSITIVE ELECTRODE MIX FOR LITHIUM ION SECONDARY BATTERY, METHOD FOR MANUFACTURING SAME, AND METHOD FOR MANUFACTURING LITHIUM ION SECONDARY BATTERY**

POSITIVELEKTRODENMISCHUNG FÜR LITHIUM-IONEN-SEKUNDÄRBATTERIE, VERFAHREN ZUR HERSTELLUNG DAVON UND VERFAHREN ZUR HERSTELLUNG EINER LITHIUM-IONEN-SEKUNDÄRBATTERIE

MÉLANGE D'ÉLECTRODE POSITIVE POUR BATTERIE SECONDAIRE AU LITHIUM ION, SA MÉTHODE DE PRODUCTION ET PROCÉDÉ DE PRODUCTION DE BATTERIE SECONDAIRE AU LITHIUM ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2019 JP 2019094638**

(43) Date of publication of application:
**30.03.2022 Bulletin 2022/13**

(73) Proprietor: **Kureha Corporation**
**Chuo-ku**
**Tokyo 103-8552 (JP)**

(72) Inventors:
- **IGARASHI, Tamito**
  **Tokyo 103-8552 (JP)**
- **SATO, Hiroshi**
  **Tokyo 103-8552 (JP)**
- **IKEYAMA, Yasufumi**
  **Tokyo 103-8552 (JP)**
- **KATONO, Masataka**
  **Tokyo 103-8552 (JP)**

(74) Representative: **Novagraaf Group**
**Chemin de l'Echo 3**
**1213 Onex (CH)**

(56) References cited:
**EP-A1- 3 312 919**
**WO-A1-2006/018921**
**JP-A- 2011 071 100**
**US-A1- 2014 212 755**
**US-A1- 2018 294 483**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The present invention relates to a positive electrode mix for a lithium ion secondary battery and a method for manufacturing the same, and a method for manufacturing a lithium ion secondary battery.

### Background Art

As active materials used in positive electrodes of lithium ion secondary batteries, lithium metal oxides such as $LiCoO_2$, $LiNiO_2$, nickel cobalt manganese-based active material, and nickel cobalt aluminum-based active materials are known. Among these, there is expansion of application of an active material with a high proportion of Ni while the used amount of Co, for which stable supply is difficult and the price tends to increase easily, is lowered. Application of an active material having a high nickel proportion is expanded because charge/discharge capacity of a lithium ion secondary battery may be increased. However, it is known that a positive electrode mix containing an active material having a high nickel proportion has problems in that the viscosity of the electrode mix in a slurry form tends to be increased during storage and the electrode mix may be gelled in some cases. Hereinafter, in the present application, an active material having a nickel proportion of 55 mol% or greater is referred to as a high-nickel active material.

In response to this problem, Patent Document 1 describes that gelling of a positive electrode mix can be suppressed by using a vinylidene fluoride polymer containing 70 mol% or greater of vinylidene fluoride and 0.5 mol% or greater of chlorotrifluoroethylene as a binder.

Furthermore, Patent Document 2 describes that gelling of a positive electrode mix is suppressed by removing, for example, lithium sulfate and lithium hydroxide present on particle surfaces of a lithium metal oxide or substituting the lithium hydroxide with lithium carbonate by washing a high-nickel active material with a lithium carbonate aqueous solution.

Furthermore, Patent Document 3 describes that gelling of a positive electrode mix is suppressed by removing impurities, such as lithium hydroxide, present on particle surfaces of a lithium metal oxide by washing a high-nickel active material with an aqueous solution containing a water-soluble lithium salt other than lithium hydroxide.

EP 3 312 919 A1 describes a positive electrode for a metal secondary battery. The positive electrode includes a positive current collector, and a positive active material layer disposed on the positive current collector, wherein the positive active material layer includes: a positive active material, a salt including an alkali metal salt, an alkaline earth metal salt, or a combination thereof, and a polymeric first binder including a repeating unit represented by Formula 1

Formula 1

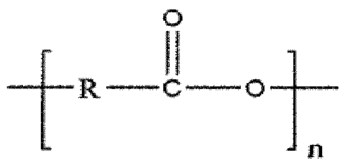

,

wherein R is a substituted or unsubstituted $C_2$ - $C_5$ alkylene group, a substituted or unsubstituted $C_2$ - $C_6$ alkoxylene group, a substituted or unsubstituted $C_2$ - $C_6$ alkoxycarbonylene group, a substituted or unsubstituted $C_2$ - $C_6$ alkylene oxide group, or a combination thereof, and n is an integer from 90 to 2,700. A metal secondary battery including same is also disclosed.

From US 2014/0212755 A1 an as-prepared cathode for a secondary battery is known. The cathode comprises an alkaline metal oxide, an alkali metal sulfide, an alkali metal salt, or a combination of any two or more thereof.

US 2018/0294483 A1 discloses a positive electrode plate and an energy storage device. The positive electrode plate comprises a positive current collector and a positive electrode film provided on the positive current collector and comprising a positive electrode active material. The positive electrode further comprises an additive, the additive comprising a C - C double bond-containing sultone. When the positive electrode plate is applied in an energy storage device, the energy storage device has lower direct current internal resistance, excellent high temperature thermal stability performance, and excellent low temperature lithium precipitation performance at the same time.

**Citation List**

Patent Document

Patent Document 1: JP 11-195419 A
Patent Document 2: JP 2017-45632 A
Patent Document 3: JP 2017-45633 A

**Summary of Invention**

Technical Problem

As described in Patent Documents 1 to 3, various studies are made on methods of suppressing viscosity increase over time of a positive electrode mix containing a high-nickel active material.

However, it has been known that, in crystalline polymers, crystallinity of a copolymer tends to be disordered, copolymers generally have lower heat resistance than those of homopolymers. Therefore, rather than using a vinylidene fluoride copolymer as described in Patent Document 1, there has been a demand for development of a method of suppressing viscosity increase over time of a positive electrode mix containing a high-nickel active material even when a polymer having higher heat resistance, such as vinylidene fluoride homopolymer, is used.

Furthermore, if it is attempted to wash an active material as described in Patent Documents 2 and 3, washing conditions are required to be set in a manner that lithium ions do not flow out from the active material, and manufacturing cost is increased by providing washing and following drying in the manufacturing process of the positive electrode mix. Therefore, there has been a demand for development of a more simple and easy method of suppressing viscosity increase over time of a positive electrode mix containing a high-nickel active material.

The present invention is completed in light of the problems described above, and an object of the present invention is to provide a positive electrode mix for a lithium ion secondary battery that can be produced regardless of type of a binder, that can be produced more simply and easily rather than those involving, for example, washing of an active material, and that suppresses viscosity increase over time during, for example, storage, a method for manufacturing the positive electrode mix for a lithium ion secondary battery, and a method for manufacturing a lithium ion secondary battery using the positive electrode mix for a lithium ion secondary battery.

**Solution to Problem**

The positive electrode mix for a lithium ion secondary battery according to claim 1 solves the problems describe above and contains a positive electrode active material containing a lithium metal oxide represented by Formula (1), a vinylidene fluoride polymer, and an additive selected from the group consisting of LiBr, LiCl, and $CaCl_2$; wherein a content of the additive is an amount that is 0.001 parts by mass or greater and 1.0 part by mass or less per 100 parts by mass of the positive electrode active material.

$$Li_1 + xMO_2 \ldots \qquad (1)$$

In Formula (1), X is a number satisfying $-0.15 < X \leq 0.15$, and M is Ni or an atomic group containing two or more types of atoms including 55 mol% or greater and less than 100 mol% of Ni.

Furthermore described is according to claim 2, a method for manufacturing a positive electrode mix for a lithium ion secondary battery according to claim 1, the positive electrode mix containing a positive electrode active material, a vinylidene fluoride polymer, and an additive selected from the group consisting of LiBr, LiCl, and $CaCl_2$; and optionally an organic solvent; the method comprising:

preparing a mixture selected from the group consisting of a mixture of the vinylidene fluoride polymer and the additive, a mixture of the organic solvent and the additive, and a mixture of a solution obtained by dissolving the vinylidene fluoride polymer in the organic solvent and the additive; and
mixing by adding a positive electrode active material containing a lithium metal oxide represented by Formula (1) in the mixture;

$$Li_1 + xMO_2 \ldots \qquad (1)$$

where X is a number satisfying $-0.15 < X \leq 0.15$, and M is Ni or an atomic group containing two or more types of atoms including 55 mol% or greater and less than 100 mol% of Ni.

In addition, disclosed is according to claim 3, a method for manufacturing a lithium ion secondary battery, the method comprising:: obtaining a positive electrode for a lithium ion secondary battery by applying the positive electrode mix for a lithium ion secondary battery according to claim 1 or the positive electrode mix for a lithium ion secondary battery manufactured by the manufacturing method according to claim 2 on a surface of a current collector, and drying; and obtaining a lithium ion secondary battery by combining the positive electrode, a negative electrode for a lithium ion secondary battery, and an electrolyte solution.

## Advantageous Effects of Invention

According to an embodiment of the present invention, there are provided a positive electrode mix for a lithium ion secondary battery that can be produced regardless of type of a binder, that can be produced more simply and easily rather than those involving, for example, washing of an active material, and that suppresses viscosity increase over time during, for example, storage, a method for manufacturing the positive electrode mix for a lithium ion secondary battery, and a method for manufacturing a lithium ion secondary battery using the positive electrode mix for a lithium ion secondary battery.

## Description of Embodiments

1. Positive Electrode Mix for Lithium Ion Secondary Battery

The present invention relates to a positive electrode mix for a lithium ion secondary battery.

The positive electrode mix contains a positive electrode active material containing a lithium metal oxide represented by Formula (1):

$$Li_{1+X}MO_2 \quad ... \qquad (1)$$

where X is a number satisfying $-0.15 < X \leq 0.15$, and M is Ni or an atomic group containing two or more types of atoms including 55 mol% or greater and less than 100 mol% of Ni;

a vinylidene fluoride polymer; and

an additive selected from the group consisting of LiBr, LiCl, and $CaCl_2$;

wherein a content of the additive is an amount that is 0.001 parts by mass or greater and 1.0 part by mass or less per 100 parts by mass of the positive electrode active material.

The positive electrode mix is typically in a slurry form.
Furthermore, the positive electrode mix may contain other substances that can be typically contained in a positive electrode mix, such as a conductive additive and an organic solvent.

1-1. Positive electrode active material

The positive electrode active material contains a lithium metal oxide represented by Formula (1).

$$Li_{1+X}MO_2 \quad ... \qquad (1)$$

In Formula (1), X is a number satisfying $-0.15 < X \leq 0.15$. X is preferably a number satisfying $-0.10 < X \leq 0.10$, and more preferably a number satisfying $-0.05 < X \leq 0.05$.

Furthermore, in Formula (1), M is Ni or an atomic group containing two or more types of atoms including 55 mol% or greater and less than 100 mol% of Ni. The atomic group may contain atoms such as Co, Fe, Al, Mn, Cr, and V besides Ni. When M is the atomic group described above, the atomic group preferably contains 65 mol% or greater and less than 98 mol% of Ni, and more preferably contains 75 mol% or greater and less than 96 mol% of Ni. The positive electrode active material is a so-called high-nickel positive electrode active material containing a lithium metal oxide containing a relatively large amount of nickel.

From the perspective of enhancing capacity density of a positive electrode, the positive electrode active material is preferably a particle having a small particle size. From the perspective described above, the average particle size of the positive electrode active material is preferably 30 μm or less, more preferably 1 μm or greater and 20 μm or less, and even more preferably 2 μm or greater and 15 μm or less. Note that the average particle size is a $Dv_{50}$ value (median diameter) obtained by using the laser diffraction/scattering method.
Furthermore, from the perspective of reducing reaction resistance while lowering of energy density is suppressed, the positive electrode active material is preferably a particle having a relatively large specific surface area. From the perspective described above, the specific surface area of the positive electrode active material is preferably 0.1 $m^2/g$ or greater and 3 $m^2/g$ or less. Note that the specific surface area is a value measured by the BET method.
The positive electrode active material may contain a substance that can act as a positive electrode active material besides the lithium metal oxide represented by Formula (1). However, based on the knowledge of the present inventors, the viscosity increase over time of the positive electrode mix is observed remarkably in a positive electrode mix containing a greater amount of the lithium metal oxide. Thus, the effect of suppressing the viscosity increase over time is remarkable for the positive electrode mix containing a greater amount of the lithium metal oxide. From the perspective described above, the content of the lithium metal oxide represented by Formula (1) in the positive electrode active material is preferably 10 mass% or greater and 95 mass% or less, and more preferably 50 mass% or greater and 90 mass% or less, with respect to the total mass of the positive electrode active material.

1-2. Conductive Additive

The conductive additive is typically a carbon material, and graphite, including natural graphite and artificial graphite, vapor grown carbon fibers (VGCF), and carbon black, including acetylene black, Ketjen black, and furnace black, can be used.
The carbon material may have a scale form, a fibrous form, or a spherical form such as a primary particle or a secondary particle formed by aggregating the primary particles.
The content of the conductive additive in the positive electrode mix is preferably 0.1 parts by mass or greater and 10 parts by mass or less, and more preferably 0.5 parts by mass or greater and 8 parts by mass or less, per 100 parts by mass of the positive electrode active material.

1-3. Vinylidene fluoride polymer

The vinylidene fluoride polymer is a resin that acts as a binder of a positive electrode.
The vinylidene fluoride polymer may be a homopolymer of vinylidene fluoride or may be a copolymer containing a structural unit derived from vinylidene fluoride. Note that the copolymer may be a copolymer obtained by subjecting vinylidene fluoride and another monomer to copolymerization or may be a copolymer obtained by subjecting a vinylidene fluoride polymer to graft modification using another monomer.
Examples of such another monomer include a fluorine-containing alkyl vinyl compound having one polymerizable group in a molecule (hereinafter, also simply referred to as "fluorinated monomer"), a crosslinkable alkyl vinyl compound having two or more polymerizable groups in a molecule (hereinafter, also simply referred to as "crosslinkable monomer"), an unsaturated dibasic acid or unsaturated dibasic acid monoester, and a compound having a copolymerizable polar group (hereinafter, also simply referred to as "polar group-containing compound").
The fluorinated monomer can adjust crystallinity of the vinylidene fluoride polymer. Examples of the fluorinated monomer include vinyl fluoride, trifluoroethylene, tetrafluoroethylene, chlorotrifluoroethylene, hexafluoropropylene, and (per)fluoroalkyl vinyl ethers. Among them, from the perspective of making control of crystallinity easier, tetrafluoroethylene, chlorotrifluoroethylene, and hexafluoropropylene are preferable, and hexafluoropropylene is more preferable.
The content of the structural unit derived from the fluorinated monomer in the vinylidene fluoride polymer is preferably 2 mass% or greater and less than 10 mass%, more preferably 3 mass% or greater and 9 mass% or less, and even more preferably 4 mass% or greater and 8 mass% or less, with respect to the total mass of the vinylidene fluoride polymer.
The crosslinkable monomer can further enhance adhesive strength of a positive electrode dry film formed on a surface of a current collector and can suppress, for example, swelling of a binder when the binder is brought into contact with a liquid such as an electrolyte solution. Examples of the crosslinkable monomer include perfluoro divinyl ether and perfluoroalkylene divinyl ether. Note that the perfluoroalkylene divinyl ether can be a compound having a structure in which two vinyl ether groups, in which all hydrogen atoms are substituted with fluorine atoms, are bonded by a linear or branched divalent perfluoroalkylene group having from 1 to 6 carbons.
The content of the structural unit derived from the crosslinkable monomer in the vinylidene fluoride polymer is preferably greater than 0 mass% and less than 5 mass%, more preferably 0.1 mass% or greater and 4 mass% or less, and even more preferably 0.3 mass% or greater and 3 mass% or less, with respect to the total mass of the vinylidene

fluoride polymer.

The unsaturated dibasic acid or the unsaturated dibasic acid monoester can further enhance adhesive strength of a positive electrode dry film formed on a surface of a current collector by imparting polarity to a binder. Examples of the unsaturated dibasic acid include maleic acid, fumaric acid, itaconic acid, and citraconic acid. Examples of the unsaturated dibasic acid monoester include maleic acid monomethyl ester, maleic acid monoethyl ester, citraconic acid monomethyl ester, and citraconic acid monoethyl ester.

The polar group-containing compound can further enhance adhesive strength of a positive electrode dry film formed on a surface of a current collector by imparting polarity to a binder. Examples of the polar group-containing compound include (meth)acrylic acid, 2-carboxyethyl(meth)acrylate, (meth)acryloyloxyethyl succinic acid, (meth)acryloyloxypropyl succinic acid, and glycidyl(meth)acrylate.

To ensure high chemical resistance, heat resistance, electrochemical stability, and especially high electrochemical stability by vinylidene fluoride, the content of the structural unit derived from the vinylidene fluoride in the vinylidene fluoride polymer is preferably 50 mass% or greater, more preferably 80 mass% or greater, even more preferably 85 mass% or greater, and particularly preferably 87 mass% or greater, with respect to the total mass of the vinylidene fluoride polymer.

Furthermore, from the perspective of enhancing impact resistance of a produced positive electrode and enhancing processability to form a positive electrode, the inherent viscosity (ηinh) of the vinylidene fluoride polymer is preferably 0.50 dL/g or greater and 5.0 dL/g or less, more preferably 1.0 dL/g or greater and 4.0 dL/g or less, even more preferably 1.0 dL/g or greater and 3.5 dL/g or less, and particularly preferably 1.5 dL/g or greater and 3.5 dL/g or less.

The inherent viscosity (ηinh) can be determined by the following equation based on dropping time of a solution obtained by dissolving a vinylidene fluoride polymer in N,N-dimethylformamide (DMF) in a concentration of 0.4 g/dL measured by a Ubbelohde viscometer at 30°C (t), dropping time of DMF at 30°C ($t_0$), and a concentration of the vinylidene fluoride copolymer in the solution (C; herein, 0.4 g/dL).

$$\eta inh = (1/C)\cdot \ln(t/t_0)$$

Furthermore, when the vinylidene fluoride polymer contains a carboxy group derived from the polar group-containing compound, an absorbance ratio AR, which is a ratio A1/A2 of a maximum peak intensity A1 detected at 1700 $cm^{-1}$ to 1800 $cm^{-1}$ (absorption derived from stretching vibration of a carbonyl group) to a maximum peak intensity A2 detected around 3025 $cm^{-1}$ (absorption derived from CH stretching vibration) is preferably 0.01 or greater and 3 or less, and more preferably 0.05 or greater and 1 or less.

The content of the vinylidene fluoride polymer in the positive electrode mix is preferably 0.3 parts by mass or greater and 10 parts by mass or less, and more preferably 0.5 parts by mass or greater and 5 parts by mass or less, per 100 parts by mass of the positive electrode active material.

1-4. Additive

The additive is an alkali metal salt or an alkaline earth metal salt, and selected from the group consisting of LiBr, LiCl, $CaCl_2$, $LiPF_6$, $LiBF_4$, $LiAsF_6$, LiTf, LiDFOB, and LiBOB.

When being contained in a positive electrode mix containing a high-nickel active material, the additive can suppress viscosity increase over time of the positive electrode mix.

Although the reason thereof is not clear, it is conceived that this is because the additive is dissociated and ionized in an organic solvent and the pH of the positive electrode mix is kept low. In other words, it is conceived that the viscosity increase over time of the positive electrode mix is caused because the vinylidene fluoride polymer undergoes dehydrofluorination in a basic positive electrode mix and affinity to an organic solvent or active material is decreased. Especially, a high-nickel active material tends to have a higher basic impurity content than those of other active materials, a vinylidene fluoride polymer tends to be dehydrofluorinated. Thus, it is conceived that the positive electrode mix containing a high-nickel active material and a vinylidene fluoride polymer tends to cause viscosity increase over time. On the other hand, it is conceived that, when the additive is added in a positive electrode mix, the pH of the positive electrode mix is kept low because a dissociation product of the additive suppresses dissociation of basic impurities derived from an active material, the dehydrofluorination reaction of the vinylidene fluoride polymer is suppressed, and thus the viscosity increase over time of the positive electrode mix is suppressed.

The additive is preferably one of the above-mentioned lithium metal salts. Since a cation generated when the lithium metal salt is ionized is lithium, the lithium metal salt effectively suppresses dissociation of basic impurities (e.g., lithium hydroxide, lithium carbonate) present in a relatively large amount in the positive electrode active material and, in addition, effect on the electrochemical reaction of the lithium ion secondary battery by the cation is small. It is therefore conceived that the lithium metal salt is less likely to cause, for example, reduction in output density caused by addition

of a lithium metal salt to the positive electrode mix.

The additive that is a lithium metal salt is selected from LiCl, LiBr, $LiPF_6$, $LiBF_4$, $LiAsF_6$, $LiCF_3SO_3$(LiTf), $LiC_2BF_2O_4$(LiDFOB), and $Li(C_2O_4)_2B$(LiBOB).

The additive is preferably $LiPF_6$, $LiBF_4$, LiBr, $LiAsF_6$, LiTf, LiDFOB, or LiBOB.

An additive other than the lithium metal salt is $CaCl_2$..

Among these, the additive is preferably a halogen-containing lithium metal salt. The halogen-containing lithium metal salt has a high oxidation potential of the additive, and even in a case where electric potential of a positive electrode is increased, oxidation reaction is less likely to occur. The halogen that is contained in the halogen-containing lithium metal salt include fluorine, chlorine and bromine.

Among these, for the reason that reduction in durability of the lithium ion secondary battery is less likely to occur due to high oxidation resistance of halogen-containing anion generated when ionization occurred, and for the purpose of avoiding electrochemical side reactions originating from cation generated when ionization occurred, the halogen that may be contained in the halogen-containing lithium metal salt is preferably fluorine, and the additive is preferably a fluorine-containing lithium metal salt.

Furthermore, from the perspective of facilitating ionization of the additive and facilitating lowering of the pH of the positive electrode mix by anion generated by the ionization of the additive, the acid dissociation constant (pKa) in water at 25°C of the conjugate acid for the anion of the additive is preferably less than 1, more preferably -30 or greater and 0 or less, and even more preferably -20 or greater and -3 or less.

The content of the additive is 0.001 parts by mass or greater and 1.0 part by mass or less per 100 parts by mass of the positive electrode active material. When the content of the additive is 0.001 parts by mass or greater, the viscosity increase over time of the positive electrode mix can be more effectively suppressed. Note that, from the perspective of suppressing reduction in energy density, reduction in peel strength of an electrode from a current collector, and increase in initial viscosity (immediately after manufacture) of the positive electrode mix, the upper limit of the content of the additive is preferably 1.0 part by mass or less. Due to the similar reason, the content of the additive is more preferably 0.001 parts by mass or greater and 0.45 parts by mass or less, even more preferably 0.01 parts by mass or greater and 0.45 parts by mass or less, and particularly preferably 0.05 parts by mass or greater and 0.20 parts by mass or less.

Furthermore, based on the combination of types or amounts of the positive electrode active material, the vinylidene fluoride copolymer, and the organic solvent, the additive is preferably contained in a type and an amount that can adequately suppress the viscosity increase over time of the positive electrode mix.

Specifically, the additive is contained in a manner that the ratio (unit: %) of the viscosity of the positive electrode mix on the fourth day after preparation to the viscosity of the positive electrode mix immediately after the preparation is preferably 130% or less, more preferably 120% or less, and even more preferably 110% or less.

Alternatively, the additive is contained in a manner that the ratio (unit: %) of the viscosity of the positive electrode mix on the seventh day after preparation to the viscosity of the positive electrode mix immediately after the preparation is preferably 180% or less, more preferably 150% or less, even more preferably 130% or less, and particularly preferably 120% or less.

Furthermore, based on the combination of types or amounts of the positive electrode active material, the vinylidene fluoride copolymer, and the organic solvent, the additive is preferably contained in a type and an amount that do not cause a great change in the initial viscosity (immediately after manufacture) of the positive electrode mix compared to a case where the additive is not added.

Specifically, the additive is contained in a manner that the ratio (unit: %) of the initial viscosity (immediately after manufacture) of the positive electrode mix when the additive is added to the viscosity of the initial viscosity (immediately after manufacture) of the positive electrode mix when the additive is not added is preferably 50% or greater and 180% or less, more preferably 75% or greater and 150% or less, and even more preferably 85% or greater and 125% or less.

The viscosity of the positive electrode mix can be a value measured by using a known B-type viscometer.

1-5. Organic Solvent

The organic solvent described above is only required to be an organic solvent that can dissolve the vinylidene fluoride polymer.

Examples of the organic solvent include N-methyl-2-pyrrolidone (NMP), dimethylformamide, N,N-dimethylacetamide, N,N-dimethylsulfoxide, hexamethylphosphoramide, dioxane, tetrahydrofuran, tetramethylurea, triethyl phosphate, trimethyl phosphate, acetone, and methyl ethyl ketone.

The content of the organic solvent in the positive electrode mix can be set to any content in a range that allows the positive electrode mix in a slurry form to be applied on a current collector.

1-6. Other Substances

The positive electrode mix may further contain other substances that can be contained in a positive electrode mix for a lithium ion secondary battery. For example, the positive electrode mix may further contain a binder besides the vinylidene fluoride polymer.

2. Method for Manufacturing Positive Electrode Mix for Lithium Ion Secondary Battery

The positive electrode mix can be manufactured by kneading the raw materials described above and forming a slurry.

At this time, it is preferable to prepare a mixture of the vinylidene fluoride polymer and the additive, a mixture of the organic solvent and the additive, or a mixture of a solution, in which the vinylidene fluoride polymer is dissolved in the organic solvent, and the additive, and then further mix the mixture and the positive electrode active material.

It is difficult to dissolve the additive described above in the organic solvent. Therefore, when the additive and the positive electrode active material are mixed simultaneously in the organic solvent, dispersion of the additive may be inhibited by the positive electrode active material. Meanwhile, by separately performing dispersion of the additive in the organic solvent and dispersion of the positive electrode active material in the organic solvent, the concentration distribution of the additive in the positive electrode mix can be made further uniform. By this, effect of suppressing the viscosity increase over time of the positive electrode mix by the additive can be adequately achieved.

The mixture is only required to be a mixture obtained in a manner that the positive electrode active material is not simultaneously mixed at the time of preparation. From the perspective of more uniformly dispersing the additive, it is preferable to prepare a mixture of the organic solvent and the additive and then mix this with other raw materials. Specifically, the method for manufacturing the positive electrode mix preferably includes preparing a mixture of the organic solvent and the additive (additive dispersion), preparing a solution in which the vinylidene fluoride polymer is dissolved in the organic solvent (binder solution), and mixing the additive dispersion, the binder solution, and the positive electrode active material described above.

When the positive electrode mix containing a conductive additive is prepared, the conductive additive is preferably mixed in advance with the positive electrode active material.

3. Method for Manufacturing Lithium Ion Secondary Battery

The positive electrode mix can be used for production of a positive electrode for a lithium ion secondary battery by applying the positive electrode mix on a surface of a current collector and drying.

The current collector is only required to be a known current collector that is used for a positive electrode for a lithium ion secondary battery. Examples of the raw material for the current collector include iron, copper, aluminum, nickel, titanium, and alloys containing these (including stainless steel and steel). The current collector is only required to have a form such as a foil form or a net form, and the thickness is preferably 3 μm or greater and 100 μm or less, but may be 5 μm or greater and 20 μm or less.

The application of the positive electrode mix may be performed only on one face of the current collector or may be performed on both faces. The application of the positive electrode mix may be performed in a manner that a positive electrode mix layer, for which the loading is from 50 to 1000 g/m$^2$, and preferably from 100 to 650 g/m$^2$, per face after drying at a temperature of 50°C to 170°C and the thickness is from 10 μm to 1000 μm, is formed.

The positive electrode produced as described above can be used to form a lithium ion secondary battery by being combined with a negative electrode for a lithium ion secondary battery and an electrolyte solution, as well as an optionally used separator.

The negative electrode is only required to be a known negative electrode, in which a negative electrode mix layer containing a negative electrode active material and, optionally, a conductive additive for a negative electrode and a binder for a negative electrode is formed on a current collector.

Examples of the current collector include aluminum, nickel, copper, iron, and alloys containing these (including stainless steel and steel).

Examples of the negative electrode active material include carbon materials, silicon materials, metal oxides, and lithium alloys.

Examples of the conductive additive for a negative electrode include carbon fibers.

Examples of the binder for a negative electrode include vinylidene fluoride polymers, vinyl acetate polymers, thermoplastic resins such as thermoplastic polyimide and thermoplastic urethane resins, thermosetting resins such as epoxy resins, thermosetting polyimide, urea resins, and thermosetting urethane resins, and rubber polymers such as butyl rubber and styrene rubber.

The electrolyte solution is only required to be a known electrolyte solution used in a lithium ion secondary

battery and is only required to be a known electrolyte solution, in which a lithium metal salt as an electrolyte is dissolved in a non-aqueous solvent.

Examples of the non-aqueous solvent include ethylene carbonate, propylene carbonate, dimethyl carbonate, ethyl methyl carbonate, diethyl carbonate, dipropyl carbonate, methyl propyl carbonate, ethyl propyl carbonate, ethyl butyl carbonate, γ-butyrolactone, 1,2-dimethoxyethane, 1,2-diethoxyethane, methyl propionate, and ethyl propionate.

Examples of the electrolyte that is a lithium metal salt include LiCl, LiBr, LiI, $LiPF_6$, $LiBF_4$, LiBETI, $LiAsF_6$, $LiSbF_6$, $LiClO_4$, $LiBrO_4$, $LiIO_4$, $LiAlCl_4$, LiTf, LiFSI, LiTFSI, LiBETI, $LiN(CF_3SO_2)(C_4F_9SO_2)$, $LiC(CF_3SO_2)$, LiDFOB, LiBOB, $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, and $Li[PF_3(CF_2CF_2CF_2CF_3)_3]$.

Among these, the electrolyte is preferably $LiPF_6$, $LiBF_4$, LiBr, LiBETI, $LiAsF_6$, LiTf, LiFSI, LiTFSI, LiDFOB, or LiBOB.

Examples of the separator include olefin resins including polyethylenes and polypropylenes, fluororesins including vinylidene fluoride polymers, cellulose resins, polyimides, and polyamides.

The lithium ion secondary battery can be in a known form, such as a cylinder form, a pin form, a coin form, or a laminate form.

## Examples

Hereinafter, specific examples of the present invention will be described together with comparative examples, but the present invention is not limited thereto.

### 1. Raw Material

A positive electrode mix for a lithium ion secondary battery was prepared by using raw materials described below, and a positive electrode for a lithium ion secondary battery was produced by using the positive electrode mix.

### 1-1. Positive electrode active material

As a positive electrode active material, any one of those described below was used.

NCA-1: NC-01 ($Li_{1.05}Ni_{0.85}Co_{0.13}Al_{0.02}O_2$, composition is an analytical value by ICP), available from Nihon Kagaku Sangyo Co., Ltd.

LCO-1: CELLSEED C-10N ($LiCoO_2$), available from Nippon Chemical Industrial Co., Ltd.

### 1-2. Conductive Additive

As a conductive additive, any one of those described below was used.
CB: Super P (electroconductive carbon black), available from Timcal Corporation

### 1-3. Binder

As a binder, any one of those obtained by the following synthesis examples described below was used.

### 1-3-1. Modified PVDF

A modified PVDF in a powder form (hereinafter, simply referred to as "Mod-1") was obtained by the following procedure.

In an autoclave with an internal capacity of 2 liters, 1000 g of ion-exchanged water as a dispersion medium, 0.4 g of Metolose SM-100 (available from Shin-Etsu Chemical Co., Ltd.) as a cellulose-based suspending agent, 2.0 g of 50 wt% diisopropyl peroxydicarbonate-CFC 225cb solution as a polymerization initiator, 1.1 g of ethyl acetate as a chain transfer agent, 400 g of vinylidene fluoride, and 0.2 g of acryloyloxypropyl succinic acid as a monomer were charged, and the temperature was increased to 25°C over 1 hour.

Then, while the temperature was maintained at 25°C, a 5 wt% acryloyloxypropyl succinic acid aqueous solution was gradually added at a rate of 0.068 g/min over 20 hours. A total of 5.2 g of acryloyloxypropyl succinic acid was added, including the amount added initially. After the termination of addition of the acryloyloxypropyl succinic acid aqueous solution, the temperature was increased to 40°C, and the polymerization was terminated at the time when the internal pressure became 1.5 MPa-G.

After termination of the polymerization, the polymer slurry was heat-treated at 95°C for 60 minutes. The polymer

slurry was then dehydrated, washed with water, and further dried at 80°C for 20 hours, and thus the Mod-1 was obtained. The yield of the obtained polymer was 92%, the inherent viscosity ηinh was 2.50 dL/g, and the absorbance ratio AR was 0.57.

Calculation of Absorbance Ratio AR

The Mod-1 was pressed at 230°C, and an FT-IR spectrum was obtained in a wavelength range of 1500 $cm^{-1}$ to 4000 $cm^{-1}$ by using FT-730 infrared spectrophotometer, available from Horiba, Ltd. The maximum peak intensity detected at 1700 $cm^{-1}$ to 1800 $cm^{-1}$ was determined as absorption A1 derived from stretching vibration of a carbonyl group, the maximum peak intensity detected around 3025 $cm^{-1}$ was determined as absorption A2 derived from CH stretching vibration, and the ratio A1/A2 was used as the absorbance ratio AR.

Calculation of Inherent Viscosity ηinh

To calculate the inherent viscosity ηinh, a polymer solution was produced by dissolving 80 mg of a polymer in 20 mL of N,N-dimethylformamide (DMF). The dropping time t of this polymer solution was measured by using a Ubbelohde viscometer in a thermostat oven at 30°C. Similarly, the dropping time $t_0$ of DMF was also measured. Then, the inherent viscosity ηinh was determined by the following equation.

$$\eta inh = (1/C)\cdot \ln(t/t_0)$$

In the equation above, C is 0.4 g/dL.

1-3-2. PVDF Homopolymer

A homopolymer of PVDF in a powder form (hereinafter, simply referred to as "Homo-1") was obtained by the following procedure.

In an autoclave with an internal capacity of 2 liters, 1024 g of ion-exchanged water, 0.2 g of methylcellulose, 400 g of vinylidene fluoride monomer, 0.6 g of diisopropyl peroxydicarbonate, and 1.9 g of ethyl acetate were charged, and suspension polymerization was performed at 26°C for 20 hours. After completion of the polymerization, the obtained polymer slurry was heat-treated at 95°C for 30 minutes, the polymer slurry was dehydrated, washed with water, and further dried at 80°C for 20 hours, and thus the Homo-1 was obtained. The yield of the obtained polymer was 92%, and the inherent viscosity ηinh was 3.10 dL/g.

1-4. Additive

As the additive, any one of LiCl, LiBr, LiTFSI (comparative examples), $CaCl_2$, LiFSI (comparative examples), or LiBETI (comparative examples) was used.

1-5. Organic Solvent

As the organic solvent, N-methyl-2-pyrrolidone (hereinafter, simply referred to as "NMP") was used.

2. Preparation of Positive Electrode Mix

2-1. Preparation of Binder Solution

In an Erlenmeyer flask, 94 g of NMP, for which the temperature was adjusted to 25°C, was precisely weighed. While the NMP was agitated by a magnetic stirrer, 6 g of the binder (either Mod-1 or Homo-1) was charged in the flask, and a mixture was obtained. Then, the mixture was heated to 60°C and maintained at 60°C for 5 hours, and thus each binder solution was obtained. Each of the binder solution was stored overnight at room temperature and then used for preparation of a positive electrode mix.

2-2. Preparation of Additive Dispersion

In an Erlenmeyer flask, 9.4 g of NMP, for which the temperature was adjusted to 25°C, was precisely weighed. While the NMP was agitated by a magnetic stirrer, 0.6 g of LiCl powder was charged in the flask, and a mixture was

obtained. Then, the mixture was heated to 60°C and maintained at 60°C for 5 hours, and thus an additive dispersion was obtained.

By changing the type of the additive, each additive dispersion was obtained. Each additive dispersion was used for preparation of a positive electrode mix immediately after production.

2-3. Preparation of Positive Electrode Mix

An electrode mix in a slurry form was prepared by using THINKY MIXER ARE-310, available from Thinky Corporation.

First, 30 g of positive electrode active material (either NCA-1 or LCO-1) and 0.6 g of conductive additive (CB) were weighed, and agitated and mixed at a rotation rate of 320 rpm and revolution rate of 800 rpm for 1 minute. Thereafter, 1.3 g of the binder solution was added, then a predetermined amount of the additive dispersion was additionally added, and the resultant was diluted with NMP in a manner that the nonvolatile content concentration became 84.2%. Then, kneading was performed at a rotation rate of 800 rpm and a revolution rate of 2000 rpm for 2 minutes. Thereafter, 3.7 g of the binder solution was added and kneaded at a rotation rate of 800 rpm and a revolution rate of 2000 rpm for 2 minutes, and thus an electrode mix in a slurry form was prepared.

Each electrode mix was obtained in the same manner except for changing the type and the added amount of the additive dispersion.

3. Evaluation

3-1. Thickening Test

Two 10 mm φ test tubes made of PP were prepared, and the electrode mix in a slurry form was sampled in each test tube in a manner that the height was 5 cm. By using a B-type viscometer (DV-E VISCOMETER, available from Eko Instruments Co., Ltd.), measurement was performed at a rotational speed of 6 rpm by using a rotor No. 64. The viscosity at 2 minutes had passed was recorded for the electrode mix sampled in each of the test tubes, and an average value thereof was used as an initial viscosity of the sampled electrode mix.

Thereafter, each of the test tubes was capped and sealed tightly. The positive electrode mix sampled in one test tube was subjected to measurement of viscosity in the same manner after allowed to stand still at room temperature for 4 days, and the positive electrode mix sampled in the other test tube was subjected to measurement of viscosity in the same manner after allowed to stand still at room temperature for 7 days.

For each combination of the positive electrode active material and the binder, the ratio of the initial viscosity of the positive electrode mix, to which the additive was added, to the initial viscosity of the positive electrode mix, to which no additive was added, was calculated and used as "initial viscosity ratio". Furthermore, for each of the positive electrode active materials, the ratio of the viscosity on the fourth day to the initial viscosity was calculated and used as "viscosity ratio on the fourth day". Furthermore, for each of the positive electrode active materials, the ratio of the viscosity on the seventh day to the initial viscosity was calculated and used as "viscosity ratio on the seventh day".

3-2. Peel Strength of Electrode

The electrode mix was applied to one face of an aluminum current collector foil with a thickness of 15 μm using a bar coater, and heated and dried at 110°C for 30 minutes and then at 130°C for 2 hours, and thus an electrode with a loading of electrode mix in a dry state of approximately 250 $g/m^2$ was produced.

The film face to which the positive electrode mix was applied of the produced electrode and a thick plate of plastic (made of an acrylic resin; thickness: 5 mm) were adhered to each other by double-sided tape, and 90° peel strength was measured in accordance with JIS K 6854-1.

For each combination of the positive electrode active material and the binder, the ratio of the peel strength of the positive electrode mix, to which the additive was added, to the peel strength of the positive electrode mix, to which no additive was added, was calculated and used as "peel strength ratio".

Table 1 shows the initial viscosity ratio, the viscosity ratio on the fourth day and the viscosity ratio on the seventh day, and the peel strength ratio in experiments performed by changing the positive electrode active material, the type of the binder, the type and added amount of the additive.

Table 1

| No. | Positive electrode Active material | Binder | | Additive | | Evaluation | | | | Notes |
|---|---|---|---|---|---|---|---|---|---|---|
| | Type | Type | ηinh [dL/g] | Type | Added amount [part by mass] | Viscosity ratio | | | Peel strength ratio | |
| | | | | | | Initial stage | On 4th day | On 7th day | | |
| 1 | NCA-1 | Mod-1 | 2.5 | - | - | 100% | 138% | 331% | 100% | Comparative Examples |
| 2 | NCA-1 | Mod-1 | 2.5 | LiCl | 0.005 | 79% | 128% | 178% | 75% | Examples |
| 3 | NCA-1 | Mod-1 | 2.5 | LiCl | 0.02 | 93% | 99% | 108% | 69% | Examples |
| 4 | NCA-1 | Mod-1 | 2.5 | LiCl | 0.3 | 121% | 85% | 83% | 44% | Examples |
| 5 | NCA-1 | Mod-1 | 2.5 | LiBr | 0.3 | 158% | 105% | 108% | 113% | Examples |
| 6 | NCA-1 | Mod-1 | 2.5 | LiTFSI | 0.3 | 146% | 106% | 106% | 31 % | Comparative Examples |
| 7 | NCA-1 | Mod-1 | 2.5 | $CaCl_2$ | 0.3 | 126% | 107% | 109% | 25% | Examples |
| 8 | NCA-1 | Mod-1 | 2.5 | LiFSI | 0.02 | 132% | 91% | 107% | 69% | Comparative Examples |
| 9 | NCA-1 | Mod-1 | 2.5 | LiFSI | 0.3 | 150% | 98% | 92% | 46% | Comparative Examples |
| 10 | NCA-1 | Mod-1 | 2.5 | LiBETI | 0.3 | 140% | 98% | 128% | 53% | Comparative Examples |
| 11 | NCA-1 | Homo-1 | 3.1 | - | - | 100% | 140% | 192% | 100% | Comparative Examples |
| 12 | NCA-1 | Homo-1 | 3.1 | LiCl | 0.005 | 106% | 80% | 110% | 70% | Examples |
| 13 | NCA-1 | Homo-1 | 3.1 | LiCl | 0.02 | 130% | 71% | 70% | 70% | Examples |
| 14 | LCO-1 | Mod-1 | 2.5 | - | - | 100% | 117% | 126% | 113% | Reference Example |

As is clear from Table 1, the positive electrode mix containing the high-nickel positive electrode active material, the vinylidene fluoride polymer, and the additive selected from the group consisting of of LiCl, LiBr and $CaCl_2$ suppressed viscosity increase over time. On the other hand, the positive electrode mix containing the high-nickel positive electrode active material and the vinylidene fluoride polymer but not containing the additive described above exhibited remarkable viscosity increase over time.

Note that, for the positive electrode mix containing the positive electrode active material that was not high-nickel type and the vinylidene fluoride polymer, the viscosity increase over time was less likely to occur even when the additive selected from the group consisting of alkali metal salts and alkaline earth metal salts was not added.

The present application claims priority to the Japanese Patent Application No. 2019-094638 filed on May 20, 2019.

Industrial Applicability

The positive electrode mix for a lithium ion secondary battery according to an embodiment of the present invention can suppress viscosity increase over time of the positive electrode mix containing a high-nickel active material by a method that can be simply and easily performed. Therefore, according to an embodiment of the present invention, production of a lithium ion secondary battery can be more freely modified at a low cost, and contribution to development and popularization of the technologies of the same field is expected.

## Claims

1. A positive electrode mix for a lithium ion secondary battery, the positive electrode mix comprising:

   a positive electrode active material containing a lithium metal oxide represented by Formula (1):

   $$Li_{1+X}MO_2 \ldots \qquad (1)$$

   where X is a number satisfying $-0.15 < X \leq 0.15$, and M is Ni or an atomic group containing two or more types of atoms including 55 mol% or greater and less than 100 mol% of Ni;
   a vinylidene fluoride polymer; and
   an additive selected from the group consisting of LiBr, LiCl, and $CaCl_2$,
   wherein a content of the additive is an amount that is 0.001 parts by mass or greater and 1.0 part by mass or less per 100 parts by mass of the positive electrode active material.

2. A method for manufacturing a positive electrode mix for a lithium ion secondary battery according to claim 1, the positive electrode mix containing a positive electrode active material, a vinylidene fluoride polymer, and an additive selected from the group consisting of LiBr, LiCl, and $CaCl_2$, and optionally an organic solvent;
   the method comprising:

   preparing a mixture selected from the group consisting of a mixture of the vinylidene fluoride polymer and the additive, a mixture of the organic solvent and the additive, and a mixture of a solution obtained by dissolving the vinylidene fluoride polymer in the organic solvent and the additive; and
   mixing by adding a positive electrode active material containing a lithium metal oxide represented by Formula (1) in the mixture;

   $$Li_{1+X}MO_2 \ldots \qquad (1)$$

   where X is a number satisfying $-0.15 < X \leq 0.15$, and M is Ni or an atomic group containing two or more types of atoms including 55 mol% or greater and less than 100 mol% of Ni.

3. A method for manufacturing a lithium ion secondary battery, the method comprising:

   obtaining a positive electrode for a lithium ion secondary battery by applying the positive electrode mix for a lithium ion secondary battery according to claim 1 or the positive electrode mix for a lithium ion secondary battery manufactured by the manufacturing method according to claim 2 on a surface of a current collector, and drying; and
   obtaining a lithium ion secondary battery by combining the positive electrode, a negative electrode for a lithium

ion secondary battery, and an electrolyte solution.

## Patentansprüche

1. Mischung positiver Elektroden für eine Lithium-Ionen-Sekundärbatterie, die Mischung positiver Elektroden umfassend:

   ein Aktivmaterial positiver Elektroden, das ein Lithiummetalloxid enthält, das durch Formel (1) dargestellt wird:

   $$Li_1 + xMO_2 \ldots \quad (1)$$

   wobei X eine Zahl ist, die -0,15 < X ≤ 0,15 erfüllt und M Ni oder eine Atomgruppe ist, die zwei oder mehr Arten von Atomen enthält, einschließlich 55 Mol-% oder mehr und weniger als 100 Mol-% Ni;
   ein Vinylidenfluoridpolymer; und
   ein Additiv, das aus der Gruppe ausgewählt, bestehend aus LiBr, LiCl und $CaCl_2$,
   wobei ein Gehalt des Additivs eine Menge ist, die 0,001 Massenteile oder mehr und 1,0 Massenteile oder weniger pro 100 Massenteile des Aktivmaterial positiver Elektroden beträgt.

2. Verfahren zum Herstellen einer Mischung positiver Elektroden für eine Lithium-Ionen-Sekundärbatterie nach Anspruch 1, wobei die Mischung positiver Elektroden ein Aktivmaterial positiver Elektroden, ein Vinylidenfluoridpolymer und ein Additiv, das aus der Gruppe ausgewählt ist, bestehend aus LiBr, LiCl und $CaCl_2$, und optional ein organisches Lösungsmittel enthält;
   das Verfahren umfassend:

   Vorbereiten einer Mischung, die aus der Gruppe ausgewählt ist, bestehend aus einer Mischung aus dem Vinylidenfluoridpolymer und dem Additiv, einer Mischung aus dem organischen Lösungsmittel und dem Additiv, und einer Mischung aus einer Lösung, die durch Auflösen des Vinylidenfluoridpolymers in dem organischen Lösungsmittel erhalten wird, und dem Additiv; und
   Mischen durch Hinzufügen eines Aktivmaterial positiver Elektroden, das ein Lithiummetalloxid enthält, das durch die Formel (1) in der Mischung dargestellt wird;

   $$Li_1 + xMO_2 \ldots \quad (1)$$

   wobei X eine Zahl ist, die -0,15 < X ≤ 0,15 erfüllt und M Ni oder eine Atomgruppe ist, die zwei oder mehr Arten von Atomen enthält, einschließlich 55 Mol-% oder mehr und weniger als 100 Mol-% Ni.

3. Verfahren zum Herstellen einer Lithium-Ionen-Sekundärbatterie, das Verfahren umfassend:

   Erhalten einer positiven Elektrode für eine Lithium-Ionen-Sekundärbatterie durch Aufbringen der Mischung positiver Elektroden für eine Lithium-Ionen-Sekundärbatterie nach Anspruch 1 oder der Mischung positiver Elektroden für eine Lithium-Ionen-Sekundärbatterie, die durch das Herstellungsverfahren nach Anspruch 2 hergestellt wird, auf einer Oberfläche eines Stromabnehmers und Trocknen; und
   Erhalten einer Lithium-Ionen-Sekundärbatterie durch Kombinieren der positiven Elektrode, einer negativen Elektrode für eine Lithium-Ionen-Sekundärbatterie, und einer Elektrolytlösung.

## Revendications

1. Mélange d'électrodes positives pour une batterie secondaire au lithium-ion, le mélange d'électrodes positives comprenant :

   le matériau actif d'électrode contenant un oxyde de lithium-métal représenté par la formule (1) :

   $$Li_{1+x}MO_2 \ldots \quad (1)$$

   où X est un nombre satisfaisant -0,15 <X ≤ 0,15 et M est Ni ou un groupe atomique contenant deux types ou plus d'atomes comportant 55 % en moles ou plus et moins de 100 % en moles de Ni ;

un polymère de fluorure de vinylidène ; et
un additif choisi dans le groupe constitué de LiBr, LiCl et $CaCl_2$,
dans lequel une teneur de l'additif est une quantité qui est de 0,001 partie en masse ou plus et de 1,0 partie en masse ou moins pour 100 parties en masse du matériau actif d'électrode positive.

**2.** Procédé de fabrication d'un mélange d'électrodes positives pour une batterie secondaire au lithium-ion selon la revendication 1, le mélange d'électrodes positives contenant un matériau actif d'électrode positive, un polymère de fluorure de vinylidène, et un additif choisi dans le groupe constitué de LiBr, LiCl et $CaCl_2$ et éventuellement un solvant organique ;
le procédé comprenant :

la préparation d'un mélange choisi dans le groupe constitué d'un mélange du polymère de fluorure de vinylidène et de l'additif, un mélange du solvant organique et de l'additif, et un mélange d'une solution obtenue en dissolvant le polymère de fluorure de vinylidène dans le solvant organique et l'additif ; et
le mélange en ajoutant un matériau actif d'électrode positive contenant un oxyde de lithium métal représenté par la formule (1) dans le mélange ;

$$Li_{1+x}MO_2 \cdots \qquad (1)$$

où X est un nombre satisfaisant $-0,15 < X \leq 0,15$, et M est Ni ou un groupe atomique contenant deux types ou plus d'atomes comportant 55 % en moles ou plus et moins de 100 % en moles de Ni.

**3.** Procédé de fabrication d'une batterie secondaire au lithium-ion, le procédé comprenant :

l'obtention d'une électrode positive pour une batterie secondaire au lithium-ion en appliquant le mélange d'électrodes positives pour une batterie secondaire au lithium-ion selon la revendication 1 ou le mélange d'électrode positive pour une batterie secondaire au lithium-ion fabriquée par le procédé de fabrication selon la revendication 2 sur une surface d'un collecteur de courant, et le séchage ; et
l'obtention d'une batterie secondaire au lithium-ion en combinant l'électrode positive, une électrode négative pour une batterie secondaire au lithium-ion, et une solution d'électrolyte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3312919 A1
- US 20140212755 A1
- US 20180294483 A1
- JP 11195419 A
- JP 2017045632 A
- JP 2017045633 A
- JP 2019094638 A